# EUROPEAN PATENT APPLICATION

(11) **EP 4 238 845 A1**
(43) Date of publication of application: **06.09.2023**
(21) Application number: 23159265.0
(22) Date of filing: 28.02.2023
(51) Int. Cl.: B60W 60/00, B60W 40/04

(54) **METHODS AND SYSTEMS FOR BUILDING KNOWLEDGE BASE FOR NORMALCY MODE DRIVING ACTIVITIES**

(30) Priority: 02.03.2022 US 202263268787 P
(71) Applicant: Tusimple, Inc., San Diego, CA 92122 (US)
(72) Inventor: HAMMOUD, Riad I., San Diego, 92122 (US)
(74) Representative: Morrall, Jonathan Ian McLachlan

(57) **Abstract**

An example method for determining a normalcy mode of an autonomous vehicle may include obtaining sensor outputs from a set of sensors disposed on the autonomous vehicle and configured to sense information about an environment in which the autonomous vehicle is operating, wherein the environment includes other vehicles within a predetermined range of the autonomous vehicle, determining perception system indicators associated with a perception of the set of sensors, driving behavior indicators associated with driving behaviors of the other vehicles proximate to the autonomous vehicle, and contextual indicators associated with the environment in which the autonomous vehicle is operating, from the sensor outputs, and generating information indicative of normal and abnormal activities of the other vehicles within the predetermined range of the autonomous vehicle based on the perception system indicators, the driving behavior indicators, and contextual indicators.

## Description

### TECHNICAL FIELD

This document generally relates to devices, systems, and methods that pertain to detection of driver behavior.

### BACKGROUND

Autonomous vehicle navigation is a technology for sensing the position and movement of a vehicle, and, based on the sensing, autonomously controlling the vehicle to navigate towards a destination. Autonomous vehicles have important applications in transportation of people, goods and services. Driver behavior including speeding, harsh braking, harsh acceleration and cornering can lead to unsafe driving and even an increase in traffic accidents. However, it is difficult for autonomous vehicles to make an accurate prediction on behaviors of drivers in the proximity of an autonomous vehicle due to lack of information about abnormal driving behaviors.

### SUMMARY

Disclosed are devices, systems, and methods for capturing sensor data and processing the sensor data using an active learning algorithm to detect abnormal driving situations.

In an aspect, the disclosed technology can be implemented to provide a method for determining a normalcy mode of an autonomous vehicle. The method may include obtaining, by a processor, sensor outputs from a set of sensors disposed on the autonomous vehicle and configured to sense information about an environment in which the autonomous vehicle is operating, wherein the environment includes other vehicles proximate to the autonomous vehicle, acquiring, by the processor, one or more perception system indicators, one or more driving behavior indicators, and one or more contextual indicators from the sensor outputs, the one or more perception system indicators being associated with a perception of the set of sensors, the one or more driving behavior indicators being associated with driving behaviors of the other vehicles within the predetermined range of the autonomous vehicle, the one or more contextual indicators being associated with the environment in which the autonomous vehicle is operating, and generating, by the processor, information indicative of normal and abnormal activities of the other vehicles within the predetermined range of the autonomous vehicle based on the one or more perception system indicators, the one or more driving behavior indicators, and the one or more contextual indicators.

In another aspect, the disclosed technology can be implemented to provide a normalcy mode determination system. The system may include a perception system indicator generator configured to generate one or more perception system indicators based on sensor data obtained from a set of sensors in an autonomous vehicle to indicate whether the sensors are operating under normal conditions, a driving behavior indicator generator configured to generate one or more driving behavior indicators based on the sensor data to indicate whether an abnormal driving activity has occurred by a vehicle in proximity of the autonomous vehicle, a contextual indicator generator configured to generate one or more contextual indicators based on the sensor data to indicate whether there is a circumstance that results in the abnormal driving activity, and a processor in communication with the perception system indicator generator, the driving behavior indicator generator, and the contextual indicator generator. The processor is configured to determine whether a driving activity falls within a normalcy mode based on the one or more perception system indicators, the one or more driving behavior indicators, and the one or more contextual indicators.

The above and other aspects and features of the disclosed technology are described in greater detail in the drawings, the description and the claims.

### BRIEF DESCRIPTION OF THE DRAWINGS

FIG. 1 shows a block diagram of an example vehicle ecosystem in which an in-vehicle control computer located in the vehicle comprises a wind estimation system.
FIG. 2 shows a flowchart of an example method for life normalcy mode determination based on some embodiments of the disclosed technology.
FIG. 3 shows an example of a normalcy mode determination system for inference of abnormal activities based on some embodiments of the disclosed technology.
FIG. 4 shows an example of a hardware platform that can implement some methods and techniques described in the present document.

### DETAILED DESCRIPTION

Driver behavior including speeding, harsh braking, harsh acceleration, cornering and excessive idling can lead to unsafe driving and even an increase in traffic accidents. The disclosed technology can be implemented in some embodiments to generate indicators of normal and abnormal driving patterns of drivers in the proximity of an autonomous vehicle using a supervised learning method, thereby determining abnormal driver behaviors.

The transportation industry has been undergoing considerable changes in the way technology is used to control the operation of the vehicles. As exemplified in the automotive passenger vehicle, there has been a general advancement towards shifting more of the operational and navigational decision making away from the human driving and into on-board computing power. This is exemplified in the extreme by the numerous under-development autonomous vehicles. Current implementations are in intermediate stages, such as the partially-autonomous operation in some vehicles (e.g., autonomous acceleration and navigation, but with the requirement of a present and attentive driver), the safety-protecting operation of some vehicles (e.g., maintaining a safe following distance and automatic braking), the safety-protecting warnings of some vehicles (e.g., blind-spot indicators in side-view mirrors and proximity sensors), as well as ease-of-use operations (e.g., autonomous parallel parking).

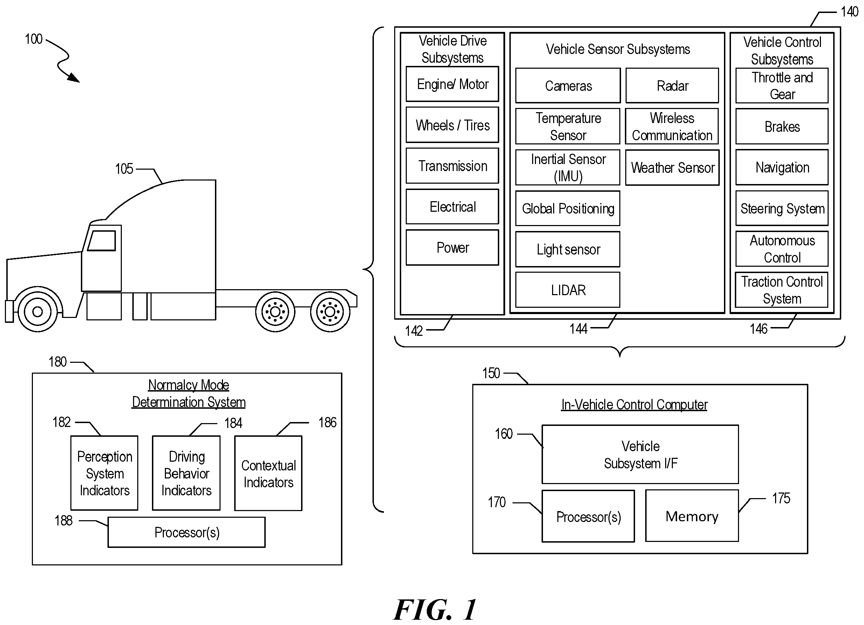

FIG. 1 shows a block diagram of an example vehicle ecosystem 100 in which an in-vehicle control computer 150 located in the autonomous vehicle 105 includes a synchronization unit that synchronizes multiple heterogeneous sensors. As shown in FIG. 1, the autonomous vehicle 105 may be a semi-trailer truck. The vehicle ecosystem 100 may include several systems and components that can generate and/or deliver one or more sources of information/data and related services to the in-vehicle control computer 150 that may be located in an autonomous vehicle 105. The in-vehicle control computer 150 can be in data communication with a plurality of vehicle subsystems 140, all of which can be resident in the autonomous vehicle 105. The in-vehicle control computer 150 and the plurality of vehicle subsystems 140 can be referred to as autonomous driving system (ADS). A vehicle subsystem interface 160 is provided to facilitate data communication between the in-vehicle control computer 150 and the plurality of vehicle subsystems 140. In some embodiments, the vehicle subsystem interface 160 can include a controller area network controller to communicate with devices in the vehicle subsystems 140.

In some implementations, the in-vehicle control computer 150 may include at least one processor 170 (which can include at least one microprocessor) that executes processing instructions stored in a non-transitory computer readable medium, such as a memory 175. The in-vehicle control computer 150 may also represent a plurality of computing devices that may serve to control individual components or subsystems of the autonomous vehicle 105 in a distributed fashion. In some embodiments, the memory 175 may contain processing instructions (e.g., program logic) executable by the processor 170 to perform various methods and/or functions of the autonomous vehicle 105 as explained in this patent document. For instance, the processor 170 executes the operations associated with the plurality of vehicle subsystems 140 for ensuring safe operation of the autonomous vehicle, which may include switching from a default operating mode to a minimal risk condition (MRC) mode.

In some implementations, the memory 175 may contain additional instructions as well, including instructions to transmit data to, receive data from, interact with, or control one or more of the vehicle drive subsystem 142, the vehicle sensor subsystem 144, and the vehicle control subsystem 146.

The autonomous vehicle 105 may include various vehicle subsystems that facilitate the operation of vehicle 105. The vehicle subsystems may include a vehicle drive subsystem 142, a vehicle sensor subsystem 144, and/or a vehicle control subsystem 146. The components or devices of the vehicle drive subsystem 142, the vehicle sensor subsystem 144, and the vehicle control subsystem 146 are shown as examples. In some embodiment, additional components or devices can be added to the various subsystems or one or more components or devices can be removed. The vehicle drive subsystem 142 may include components operable to provide powered motion for the autonomous vehicle 105. In an example embodiment, the vehicle drive subsystem 142 may include an engine or motor, wheels/tires, a transmission, an electrical subsystem, and a power source.

The vehicle sensor subsystem 144 may include a number of sensors configured to sense information about an environment in which the autonomous vehicle 105 is operating or a condition of the autonomous vehicle 105. The vehicle sensor subsystem 144 may include one or more cameras or image capture devices, one or more temperature sensors, an inertial measurement unit (IMU), a localization system such as a Global Positioning System (GPS), a laser range finder/LiDAR unit, a RADAR unit, an ultrasonic sensor, and/or a wireless communication unit (e.g., a cellular communication transceiver). The vehicle sensor subsystem 144 may also include sensors configured to monitor internal systems of the autonomous vehicle 105 (e.g., an 02 monitor, a fuel gauge, an engine oil temperature, etc.,). In some implementations, the autonomous vehicle 105 may further include a synchronization unit that synchronizes multiple heterogeneous sensors.

The IMU may include any combination of sensors (e.g., accelerometers and gyroscopes) configured to sense position and orientation changes of the autonomous vehicle 105 based on inertial acceleration. The localization system may be any sensor configured to estimate a geographic location of the autonomous vehicle 105. For this purpose, the localization system may include a receiver/transmitter operable to provide information regarding the position of the autonomous vehicle 105 with respect to the Earth. The RADAR unit may represent a system that utilizes radio signals to sense objects within the environment in which the autonomous vehicle 105 is operating. In some embodiments, in addition to sensing the objects, the RADAR unit may additionally be configured to sense the speed and the heading of the objects proximate to the autonomous vehicle 105. The laser range finder or LiDAR unit may be any sensor configured to sense objects in the environment in which the autonomous vehicle 105 is located using lasers. The LiDAR unit may be a spinning LiDAR unit or a solid-state LiDAR unit. The cameras may include one or more cameras configured to capture a plurality of images of the environment of the autonomous vehicle 105. The cameras may be still image cameras or motion video cameras.

The vehicle control subsystem 146 may be configured to control operation of the autonomous vehicle 105 and its components. Accordingly, the vehicle control subsystem 146 may include various elements such as a throttle and gear, a brake unit, a navigation unit, a steering system and/or an autonomous control unit. The throttle may be configured to control, for instance, the operating speed of the engine and, in turn, control the speed of the autonomous vehicle 105. The gear may be configured to control the gear selection of the transmission. The brake unit can include any combination of mechanisms configured to decelerate the autonomous vehicle 105. The brake unit can use friction to slow the wheels in a standard manner. The brake unit may include an anti-lock brake system (ABS) that can prevent the brakes from locking up when the brakes are applied. The navigation unit may be any system configured to determine a driving path or route for the autonomous vehicle 105. The navigation unit may additionally be configured to update the driving path dynamically while the autonomous vehicle 105 is in operation. In some embodiments, the navigation unit may be configured to incorporate data from the localization system and one or more predetermined maps so as to determine the driving path for the autonomous vehicle 105. The steering system may represent any combination of mechanisms that may be operable to adjust the heading of vehicle 105 in an autonomous mode or in a driver-controlled mode.

The traction control system (TCS) may represent a control system configured to prevent the autonomous vehicle 105 from swerving or losing control while on the road. For example, TCS may obtain signals from the IMU and the engine torque value to determine whether it should intervene and send instruction to one or more brakes on the autonomous vehicle 105 to mitigate the autonomous vehicle 105 swerving. TCS is an active vehicle safety feature designed to help vehicles make effective use of traction available on the road, for example, when accelerating on low-friction road surfaces. When a vehicle without TCS attempts to accelerate on a slippery surface like ice, snow, or loose gravel, the wheels can slip and can cause a dangerous driving situation. TCS may also be referred to as electronic stability control (ESC) system.

In some embodiments of the disclosed technology, the autonomous vehicle 105 may also include a normalcy mode determination system 180. In other implementations, the normalcy mode determination system 180 may be located outside of the autonomous vehicle 105. In some implementations, the normalcy mode determination system 180 may include a perception system indicator generator 182, a driving behavior indicator generator 184, a contextual indicator generator 186, and one or more processors 188.

In some implementations, the perception system indicator generator 182 may be configured to generate perception system indicators that are generated based on, e.g., sensor outputs such as visual sensor outputs and/or sound sensor outputs. In one example, the perception system indicators can indicate the health of a perception system or a sensor system in the autonomous vehicle. In some implementations, the autonomous vehicle 105 can infer that an abnormal activity has occurred to the autonomous vehicle 105 upon a detection of a sudden failure of the sensor system in a normal environment (e.g., normal weather).

In some implementations, the driving behavior indicator generator 184 may be configured to generate driving behavior indicators associated with drivers within a predetermined range of (e.g., in the proximity of) the autonomous vehicle 105, such as speeding, harsh braking, harsh acceleration and cornering, and unresponsiveness to signals.

In some implementations, the contextual indicator generator 186 may be configured to generate contextual indicators such as traffic conditions and weather conditions. In one example, in a case where there is an abnormal driving activity of a driver within a predetermined range of the autonomous vehicle 105, the normalcy mode determination system 180 can categorize such an abnormal driving activity as a normalcy mode driving activity if the contextual indicator indicates that there is a special circumstance (e.g., sudden worsening weather conditions) that results in such an abnormal driving activity. In one example, the predetermined range can be determined based on a range (e.g., 0 to several dozens of feet from the autonomous vehicle 105) of the perception system or the sensor system as defined by the sensitivity of the perception system or the sensor system.

In some implementations, the one or more processors 188 may perform operations associated with building a knowledge base for a normalcy mode for driving pattern analysis, which can be used for inference of abnormal activities, based on inputs received from various vehicle subsystems (e.g., the vehicle drive subsystem 142, the vehicle sensor subsystem 144, and the vehicle control subsystem 146).

In some embodiments of the disclosed technology, the autonomous vehicle 105 may also include an artificial intelligence (AI) system or a system with an active learning algorithm that is configured to perform various operations at a learning phase and an inference phase in building the knowledge base for the normalcy mode, as will be discussed below. The autonomous vehicle 105 can be equipped with multiple sensors, such as cameras, radars and lidar, which help them better understand the surroundings and in path planning. These sensors generate a massive amount of data, and the AI system processes the data and train the normalcy mode determination system 180.

Abnormal behaviors or activities of drivers within the predetermined range of the autonomous vehicle 105 may include speeding, harsh braking, harsh acceleration, harsh lane changes, and cornering that may be considered unsafe driving and may lead to an increased risk of a traffic accident. In other words, abnormal behaviors and activities of drivers may be regarded as abnormal driving when such behaviors/activities are determined to be unsafe. The disclosed technology can be implemented in some embodiments to generate indicators of normal and abnormal driving patterns of drivers using a supervised learning method, thereby determining whether driving activities of the drivers within the predetermined range of the autonomous vehicle fall within a normalcy driving mode.

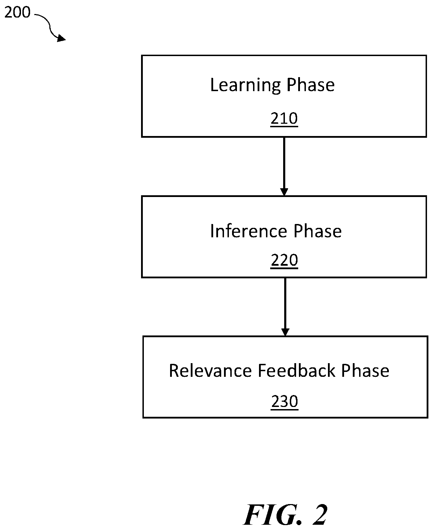

FIG. 2 shows a flowchart of an example method 200 for normalcy mode determination based on some embodiments of the disclosed technology.

Referring to FIG. 2, the method 200 for normalcy mode determination may include a learning phase 210, an inference phase 220, and a relevance feedback phase 230. In some implementations, at the learning phase 210, a normalcy mode determination system (e.g., 180 in FIG. 1) may generate indicators of normal and abnormal driving patterns of drivers within the predetermined range of the autonomous vehicle 105 to determine whether or not a certain driving activity of a driver within the predetermined range of the autonomous vehicle is a "normalcy mode" driving activity. In one example, in a case where there is an abnormal driving activity of a driver that leads to an emergency stop of the autonomous vehicle, such a driving activity still falls within the normalcy mode if there is a contextual indicator that can justify such an abnormal driving activity. Conversely, in a case where there is an abnormal driving activity of a driver that leads to an emergency stop of the autonomous vehicle, such a driving activity does not fall within the normalcy mode if there is no contextual indicator that can justify such an abnormal driving activity. In some implementations, the normalcy mode determination may include building a knowledge base for such "normalcy mode" driving activities for pattern of life analysis.

In some implementations, such indicators of normal and abnormal driving patterns can be generated by using sensor outputs that capture movement of the vehicle, and/or audio sensor outputs and/or visual sensor outputs and/or other contemporaneous information, and thus various types of driver's driving behaviors can be identified based on such indicators.

In some implementations, at the inference phase 220, an active learning algorithm or a model for inference of abnormal activities can carry out a supervised learning process to determine that abnormal activities have occurred, based on the indicators of normal and abnormal driving patterns. In one example, the active learning algorithm can include a decision tree where an expert labels positive and negative patterns out of behavior patterns collected or generated at the learning phase 210. In some implementations, the inference of abnormal activities can be based on perception system indicators, driving behavior indicators, and contextual indicators.

In some implementations, at the relevance feedback phase 230, the normalcy mode determination system can alert a human operator of the abnormal activities of the vehicle. In addition, the normalcy mode determination system can receive a feedback message from the human operator to train the active learning algorithm or improve the model for inference of abnormal activities. In some implementations, an active learning is used by the normalcy mode determination system in encounters with agents of interest, with feedback from a human operator at teleoperations center (e.g., a command center), to improve identification of what events can be included in the normalcy mode. In some implementations, synthetic data can be used to train an initial model associated with the active learning.

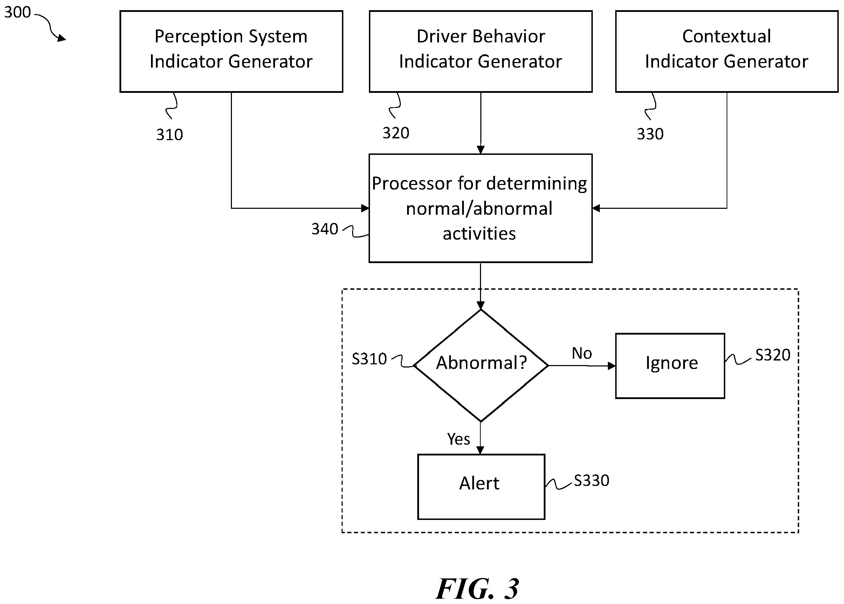

FIG. 3 shows an example of a normalcy mode determination system 300 for inference of abnormal activities based on some embodiments of the disclosed technology.

Referring to FIG. 3, a normalcy mode determination system 300 may include a perception system indicator generator 310, a driving behavior indicator generator 320, a contextual indicator generator 330, and a processor 340 for determining normal/abnormal activities.

In some implementations, the perception system indicator generator 310, the driving behavior indicator generator 320, and the contextual indicator generator 330 generate perception system indicators, driving behavior indicators, and contextual indicators, respectively, based on sensor data obtained from a set of sensors in an autonomous vehicle.

In some implementations, the processor 340 may determine which driving activity falls within the normalcy mode based on outputs of the perception system indicator generator 310, the driving behavior indicator generator 320, and the contextual indicator generator 330.

In some implementations, the processor 340 may include an active learning algorithm or a model for inference of abnormal activities can carry out a supervised learning process to determine abnormal activities have occurred based on the outputs of the perception system indicator generator 310, the driving behavior indicator generator 320, and the contextual indicator generator 330, thereby producing a driving pattern of drivers within a predetermined range of (e.g., in the proximity of) the autonomous vehicle.

In some implementations, the driving pattern can constitute a driving pattern database or a normal/abnormal driving activity range that can be used to determine whether a certain driving activity should be regarded as a normal driving activity or an abnormal or malicious driving activity. In some implementations, the driving pattern database or the normal/abnormal driving activity range can be generated based on the perception system indicators, the driving behavior indicators, and the contextual indicators.

In some implementations, the perception system indicator generator 310 may be configured to monitor whether the sensors are operating under normal conditions.

In some implementations, the perception system indicator generator 310 may be configured to monitor whether the sensors are normally functioning.

In some implementations, the driving behavior indicator generator 320 may be configured to monitor whether there is an abnormal speed reduction associated with one or more vehicles within the predetermined range of the autonomous vehicle, upon occurrence of repeated drastic or sudden speed reduction of the one or more vehicles, leading to a harsh breaking of the autonomous vehicle.

In some implementations, the contextual indicator generator 330 may be configured to monitor whether there is an attempt to force the autonomous vehicle to proceed to an unknown area.

In some implementations, the processor 340 may be configured to perform an active learning algorithm to generate the database based on the one or more perception system indicators, the one or more driving behavior indicators, and the one or more contextual indicators.

In some implementations, the processor 340 may be configured to generate an alert upon a determination that the driving activity does not fall within the normalcy mode.

In some implementations, the processor 340 may be configured to receive a feedback message corresponding to the alert to train the active learning algorithm.

In some implementations, wherein the processor 340 may be configured to transmit an alert to an autonomous driving system in the autonomous vehicle to avoid accident and ensure safety of the autonomous vehicle.

Referring to FIG. 3, the processor 340 may, at S310, determine whether a driving activity of a certain vehicle within the predetermined range of the autonomous vehicle falls within a normal driving activity or an abnormal driving activity, and, upon a determination that such a driving activity falls within an abnormal driving activity range (e.g., a range that is currently set as an abnormal activity range), the processor 340, at S330, may generate a response. For example, at S330 the processor may send an alert, signal or instruction to an in-vehicle control computer (e.g., 150 in FIG. 1) or an autonomous driving system to avoid accident and ensure safety of the autonomous vehicle. Such an alert may cause an automatic change in the operation of the autonomous vehicle in response. For example, the alert may cause an automatic deceleration, stopping, lane change or other behavior of the autonomous vehicle to improve driving safety in the presence of the determined abnormal driving.

In some implementations, the processor 340, at S330, may also or instead send an alert to notify a human operator that an abnormal driving activity has occurred. Such an alert may be presented audibly and/or visually, thereby notifying the human operator of the autonomous vehicle to the abnormal driving. Such an alert thus improves safety of operation of the autonomous vehicle, since a human operator who, at the time, may not be actively operating the autonomous vehicle, is provided with information that manual intervention, operation or other activity may be required. Further, the alert to the human operator may request feedback from the human operator regarding whether such a driving activity should be regarded as an abnormal driving activity (e.g., malicious driving activity). Thus, the process may optionally include a step of receiving an input confirming whether the determination of abnormal driving activity is correct. By receiving such feedback" the abnormal driving activity range can be modified, or associated algorithms can be trained, based on the human operator's feedback. This feedback therefore improves the accuracy of future determinations of abnormal driving activity, improving operation efficiency of the autonomous vehicle and reducing the generation of erroneous alerts.

In some implementations, the processor 340, at S320, upon a determination that such a driving activity does not fall within the abnormal driving activity range, can ignore that driving activity.

In some implementations, the driving pattern can be trained or modified using a set of indicators/features, captured sequentially and/or in parallel. The set of indicators can be generated based on the following:
1. Speed profile analysis associated with vehicles within a predetermined range of (e.g., in the proximity of) the autonomous vehicle: repeated drastic or sudden speed reduction of multiple drivers within the predetermined range of the autonomous vehicle, leading to a harsh breaking of the autonomous vehicle, can be used to generate driving behavior indicators corresponding to an abnormal activity. In some implementations, this can be used to generate driving behavior indicators corresponding to an abnormal driving activity.
2. Speed reduction or sudden stop of vehicles within the predetermined range of the autonomous vehicle in good weather and traffic conditions: slowing down the vehicle within the predetermined range of the autonomous vehicle or making a sudden stop in good weather and traffic conditions, thereby preventing the autonomous vehicle from proceeding, can be used to generate driving behavior indicators corresponding to an abnormal driving activity and can be used to generate contextual indicators.
3. Drop in sensing quality: sudden and/or severe drop in sensing quality, such as the sensing quality of backup sensors, due to unknown reasons, can be used to generate contextual indicators. For example, repeated drastic or sudden speed reduction of multiple drivers within the predetermined range of the autonomous vehicle in the absence of such a drop in sensing quality can be used to generate driving behavior indicators corresponding to an abnormal activity.
4. Repeated unresponsiveness: when vehicles within the predetermined range of the autonomous vehicle repeatedly do not respond to the autonomous vehicle's signal (e.g., indicator lights such as signal for lane change, audible signals), such a repeated unresponsiveness can be used to generate driving behavior indicators corresponding to an abnormal activity.
5. Construction sites requiring rerouting of vehicle traffic: for example, when there is an unplanned construction activity that cannot be confirmed by officials and there is an attempt to force the autonomous vehicle to proceed to an unknown area, such a construction activity can be used to generate contextual indicators corresponding to an abnormal activity.

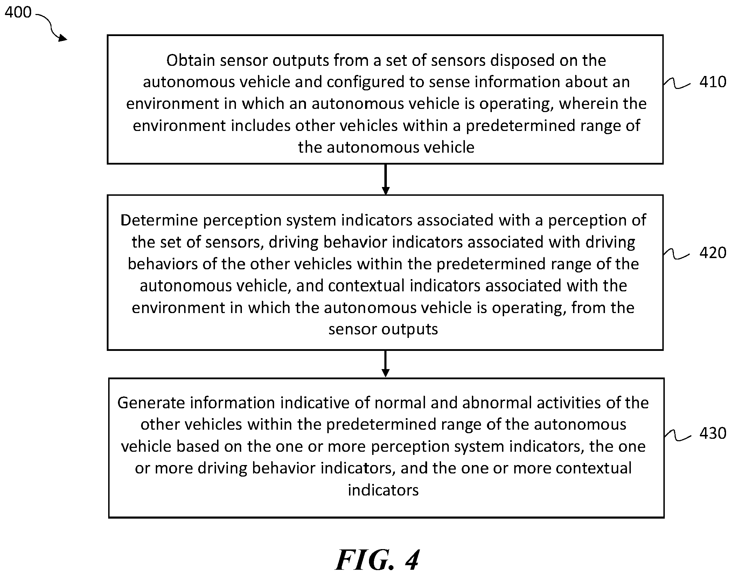

FIG. 4 shows a flowchart of an example method 400 for building a knowledge base for a normalcy mode for driving pattern analysis. The method 400 includes, at 410, obtaining, by a processor, sensor outputs from a set of sensors disposed on the autonomous vehicle and configured to sense information about an environment in which the autonomous vehicle is operating, wherein the environment includes other vehicles within a predetermined range of the autonomous vehicle, at 420, determining, by the processor, one or more perception system indicators, one or more driving behavior indicators, and one or more contextual indicators from the sensor outputs, the one or more perception system indicators being associated with a perception of the set of sensors, the one or more driving behavior indicators being associated with driving behaviors of the other vehicles within the predetermined range of the autonomous vehicle, the one or more contextual indicators being associated with the environment in which the autonomous vehicle is operating, and, at 430, generating, by the processor, information indicative of normal and abnormal activities of the other vehicles within the predetermined range of the autonomous vehicle based on the one or more perception system indicators, the one or more driving behavior indicators, and the one or more contextual indicators.

In some implementations, the one or more perception system indicators may include a sensor condition indicator to indicate whether the sensors are operating under normal conditions.

In some implementations, the one or more perception system indicators may include a sensor health indicator to indicate whether the sensors are normally functioning.

In some implementations, wherein the one or more driving behavior indicators include an abnormal speed reduction indicator to indicate an abnormal speed reduction associated with one or more vehicles within the predetermined range of the autonomous vehicle, upon occurrence of repeated drastic or sudden speed reduction of the one or more vehicles, leading to a harsh breaking of the autonomous vehicle.

In some implementations, the one or more driving behavior indicators include an obstruction activity indicator by one or more vehicles within the predetermined range of the autonomous vehicle preventing the autonomous vehicle from proceeding.

In some implementations, the one or more driving behavior indicators include a repeated unresponsiveness indicator to indicate vehicles within the predetermined range of the autonomous vehicle that repeatedly do not respond to signals of the autonomous vehicle.

In some implementations, the abnormal speed reduction indicator, obstruction activity indicator, and the repeated unresponsiveness indicator are further used to generate the one or more contextual indicators.

In some implementations, the one or more contextual indicators may include an abnormal rerouting indicator to indicate an attempt to force the autonomous vehicle to proceed to an unknown area.

In some implementations, the example method 400 further may include transmitting an alert to an autonomous driving system in the autonomous vehicle based on the one or more perception system indicators, the one or more driving behavior indicators, and the one or more contextual indicators to avoid accident and ensure safety of the autonomous vehicle.

In some implementations, the processor be configured to execute an active learning algorithm to generate the information based on the one or more perception system indicators, the one or more driving behavior indicators, and the one or more contextual indicators.

Implementations of the subject matter and the functional operations described in this patent document can be implemented in various systems, digital electronic circuitry, or in computer software, firmware, or hardware, including the structures disclosed in this specification and their structural equivalents, or in combinations of one or more of them. Implementations of the subject matter described in this specification can be implemented as one or more computer program products, e.g., one or more modules of computer program instructions encoded on a tangible and non-transitory computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more of them. The term "data processing unit" or "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them.

A computer program (also known as a program, software, software application, script, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random-access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of nonvolatile memory, media and memory devices, including by way of example semiconductor memory devices, e.g., EPROM, EEPROM, and flash memory devices. The processor and the memory can be supplemented by, or incorporated in, special purpose logic circuitry.

While this patent document contains many specifics, these should not be construed as limitations on the scope of any invention or of what may be claimed, but rather as descriptions of features that may be specific to particular embodiments of particular inventions. Certain features that are described in this patent document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. Moreover, the separation of various system components in the embodiments described in this patent document should not be understood as requiring such separation in all embodiments.

Only a few implementations and examples are described, and other implementations, enhancements and variations can be made based on what is described and illustrated in this patent document.

Also disclosed herein are the following numbered clauses:
1. A method for determining a normalcy mode of an autonomous vehicle, comprising:
   obtaining, by a processor, sensor outputs from a set of sensors disposed on the autonomous vehicle and configured to sense information about an environment in which the autonomous vehicle is operating, wherein the environment includes other vehicles within a predetermined range of the autonomous vehicle;
   determining, by the processor, one or more perception system indicators, one or more driving behavior indicators, and one or more contextual indicators from the sensor outputs, the one or more perception system indicators being associated with a perception of the set of sensors, the one or more driving behavior indicators being associated with driving behaviors of the other vehicles within the predetermined range of the autonomous vehicle, the one or more contextual indicators being associated with the environment in which the autonomous vehicle is operating; and
   generating, by the processor, information indicative of normal and abnormal activities of the other vehicles within the predetermined range of the autonomous vehicle based on the one or more perception system indicators, the one or more driving behavior indicators, and the one or more contextual indicators.
2. The method of clause 1, wherein the one or more perception system indicators includes a sensor condition indicator to indicate whether the sensors are operating under normal conditions.
3. The method of clause 1, wherein the one or more perception system indicators includes a sensor health indicator to indicate whether the sensors are normally functioning.
4. The method of clause 1, wherein the one or more driving behavior indicators include an abnormal speed reduction indicator to indicate an abnormal speed reduction associated with one or more vehicles within the predetermined range of the autonomous vehicle, upon occurrence of repeated drastic or sudden speed reduction of the one or more vehicles, leading to a harsh breaking of the autonomous vehicle.
5. The method of clause 1, wherein the one or more driving behavior indicators include an obstruction activity indicator by one or more vehicles within the predetermined range of the autonomous vehicle preventing the autonomous vehicle from proceeding.
6. The method of clause 1, wherein the one or more driving behavior indicators include a repeated unresponsiveness indicator to indicate vehicles within the predetermined range of the autonomous vehicle that repeatedly do not respond to signals of the autonomous vehicle.
7. The method of any of clauses 4-6, wherein the abnormal speed reduction indicator, obstruction activity indicator, and the repeated unresponsiveness indicator are further used to generate the one or more contextual indicators.
8. The method of clause 1, wherein the one or more contextual indicators includes an abnormal rerouting indicator to indicate an attempt to force the autonomous vehicle to proceed to an unknown area.
9. The method of clause 1, further comprising:
   transmitting an alert to an autonomous driving system in the autonomous vehicle based on the one or more perception system indicators, the one or more driving behavior indicators, and the one or more contextual indicators to avoid accident and ensure safety of the autonomous vehicle.
10. The method of clause 1, wherein the processor includes an active learning algorithm to generate the information based on the one or more perception system indicators, the one or more driving behavior indicators, and the one or more contextual indicators.
11. The method of clause 10, further comprising:
   transmitting an alert to an operator to receive a feedback from the operator and train the active learning algorithm.
12. A normalcy mode determination system, comprising:
   a perception system indicator generator configured to generate one or more perception system indicators based on sensor data obtained from a set of sensors in an autonomous vehicle to indicate whether the sensors are operating under normal conditions;
   a driving behavior indicator generator configured to generate one or more driving behavior indicators based on the sensor data to indicate whether an abnormal driving activity has occurred by a vehicle within a predetermined range of the autonomous vehicle;
   a contextual indicator generator configured to generate one or more contextual indicators based on the sensor data to indicate whether there is a circumstance that results in the abnormal driving activity; and
   a processor in communication with the perception system indicator generator, the driving behavior indicator generator, and the contextual indicator generator, the processor being configured to determine whether a driving activity falls within a normalcy mode based on the one or more perception system indicators, the one or more driving behavior indicators, and the one or more contextual indicators.
13. The system of clause 12, wherein the perception system indicator generator is configured to monitor whether the sensors are operating under normal conditions.
14. The system of clause 12, wherein the perception system indicator generator is configured to monitor whether the sensors are normally functioning.
15. The system of clause 12, wherein the driving behavior indicator generator is configured to monitor whether there is an abnormal speed reduction associated with one or more vehicles within the predetermined range of the autonomous vehicle, upon occurrence of repeated drastic or sudden speed reduction of the one or more vehicles, leading to a harsh breaking of the autonomous vehicle.
16. The system of clause 12, wherein the contextual indicator generator configured to monitor whether there is an attempt to force the autonomous vehicle to proceed to an unknown area.
17. The system of clause 12, wherein the processor is configured to execute an active learning algorithm to generate the database based on the one or more perception system indicators, the one or more driving behavior indicators, and the one or more contextual indicators.
18. The system of clause 17, wherein the processor is configured to generate an alert upon a determination that the driving activity does not fall within the normalcy mode.
19. The system of clause 18, wherein the processor is configured to receive a feedback message corresponding to the alert to train the active learning algorithm.
20. The system of clause 12, wherein the processor is configured to transmit an alert to an autonomous driving system in the autonomous vehicle to avoid accident and ensure safety of the autonomous vehicle.

## Claims

1. A method for determining a normalcy mode of an autonomous vehicle, comprising:
obtaining, by a processor, sensor outputs from a set of sensors disposed on the autonomous vehicle and configured to sense information about an environment in which the autonomous vehicle is operating, wherein the environment includes other vehicles within a predetermined range of the autonomous vehicle;
determining, by the processor, one or more perception system indicators, one or more driving behavior indicators, and one or more contextual indicators from the sensor outputs, the one or more perception system indicators being associated with a perception of the set of sensors, the one or more driving behavior indicators being associated with driving behaviors of the other vehicles within the predetermined range of the autonomous vehicle, the one or more contextual indicators being associated with the environment in which the autonomous vehicle is operating; and
generating, by the processor, information indicative of normal and abnormal activities of the other vehicles within the predetermined range of the autonomous vehicle based on the one or more perception system indicators, the one or more driving behavior indicators, and the one or more contextual indicators.

2. The method of claim 1, wherein the one or more perception system indicators includes a sensor condition indicator to indicate whether the sensors are operating under normal conditions.

3. The method of claim 1 or 2, wherein the one or more perception system indicators includes a sensor health indicator to indicate whether the sensors are normally functioning.

4. The method of any preceding claim, wherein the one or more driving behavior indicators include an abnormal speed reduction indicator to indicate an abnormal speed reduction associated with one or more vehicles within the predetermined range of the autonomous vehicle, upon occurrence of repeated drastic or sudden speed reduction of the one or more vehicles, leading to a harsh breaking of the autonomous vehicle, and optionally wherein the abnormal speed reduction indicator is further used to generate the one or more contextual indicators.

5. The method of any preceding claim, wherein the one or more driving behavior indicators include an obstruction activity indicator by one or more vehicles within the predetermined range of the autonomous vehicle preventing the autonomous vehicle from proceeding, and optionally wherein the obstruction activity indicator is further used to generate the one or more contextual indicators.

6. The method of any preceding claim, wherein the one or more driving behavior indicators include a repeated unresponsiveness indicator to indicate vehicles within the predetermined range of the autonomous vehicle that repeatedly do not respond to signals of the autonomous vehicle, and optionally wherein the repeated unresponsiveness indicator is further used to generate the one or more contextual indicators.

7. The method of any preceding claim, wherein the one or more contextual indicators includes an abnormal rerouting indicator to indicate an attempt to force the autonomous vehicle to proceed to an unknown area.

8. The method of any preceding claim, further comprising:
determining whether a driving activity falls within a normalcy mode based on the one or more perception indicators, the one or more driving behavior indicators, and the one or more contextual indicators.

9. The method of any preceding claim, further comprising:
transmitting an alert to an autonomous driving system in the autonomous vehicle based on the one or more perception system indicators, the one or more driving behavior indicators, and the one or more contextual indicators to avoid accident and ensure safety of the autonomous vehicle.

10. The method of any of claims 1 to 8, wherein the processor includes an active learning algorithm to generate the information based on the one or more perception system indicators, the one or more driving behavior indicators, and the one or more contextual indicators, and optionally further comprising transmitting an alert to an operator to receive a feedback from the operator and train the active learning algorithm.

11. The method of claim 10, further comprising:
receiving a feedback message corresponding to the alert to train the active learning algorithm.

12. The method of any of claims 1 to 8, further comprising:
generating an alert upon a determination that the driving activity does not fall within the normalcy mode.

13. The method of claim 12, further comprising:
transmitting the alert to an autonomous driving system; and
automatically changing the operation of the autonomous vehicle in response to the alert.

14. The method of claim 12 or 13, further comprising:
presenting the alert to notify a human operator of the autonomous vehicle to the determination of abnormal driving.

15. A normalcy mode determination system, comprising:
a perception system indicator generator configured to generate one or more perception system indicators based on sensor data obtained from a set of sensors in an autonomous vehicle to indicate whether the sensors are operating under normal conditions;
a driving behavior indicator generator configured to generate one or more driving behavior indicators based on the sensor data to indicate whether an abnormal driving activity has occurred by a vehicle within a predetermined range of the autonomous vehicle;
a contextual indicator generator configured to generate one or more contextual indicators based on the sensor data to indicate whether there is a circumstance that results in the abnormal driving activity; and
a processor in communication with the perception system indicator generator, the driving behavior indicator generator, and the contextual indicator generator, the processor being configured to perform the method of any preceding claim.
